(19) Europäisches Patentamt

European Patent Office

Office européen des brevets

(11) Veröffentlichungsnummer: **0 421 103 A1**

## (12) EUROPÄISCHE PATENTANMELDUNG

(21) Anmeldenummer: 90115959.0

(22) Anmeldetag: **21.08.90**

(51) Int. Cl.⁵: **B32B 7/10**, B32B 27/28,
B65D 65/40

(30) Priorität: 04.10.89 DE 3933066

(43) Veröffentlichungstag der Anmeldung:
**10.04.91 Patentblatt 91/15**

(84) Benannte Vertragsstaaten:
**AT BE CH DE DK ES FR GB IT LI LU NL SE**

(71) Anmelder: **PKL Verpackungssysteme GmbH
Kennedydamm 15-17
W-4000 Düsseldorf 30(DE)**

(72) Erfinder: **Gensch, Ingo, Dipl.-Ing.
Fuchsgracht 22
W-5172 Linnich(DE)**
Erfinder: **Hahn, Alfred
Heinrichstrasse 3
W-4353 Oer-Erkenschwick(DE)**

(74) Vertreter: **Patentanwaltsbüro Cohausz &
Florack
Schumannstrasse 97
W-4000 Düsseldorf 1(DE)**

(54) **Folienverbund, insbesondere für Verpackungszwecke.**

(57) Die Erfindung bezieht sich auf einen Folienverbund, insbesondere für Verpackungszwecke, in Form eines Laminates aus einem Trägermaterial und einer mit einer als Haftvermittler dienenden Zwischenschicht aufkaschierten Polyesterfolie. Als Trägermaterial ist vorzugsweise Aluminium oder Papier vorgesehen. Um einen Folienverbund zu erhalten, die sich leicht falten und entfalten läßt, also möglichst geringe Rückstellkräfte hat, ist bei der Erfindung vorgesehen, daß die Zwischenschicht aus zwei in Feedblock-Coextrusionstechnik aufgebrachten Lagen (3,4) von Polymeren mit verschiedenen Verbundeigenschaften besteht, von denen das mit dem Trägermaterial (1) verbundene Polymer eine ausgeprägt gute Verbundhaftung zum Trägermaterial (1) und das mit der Polyesterfolie (2) verbundene Polymer eine ausgeprägt gute Verbundhaftung zur Polyesterfolie hat.

## FOLIENVERBUND, INSBESONDERE FÜR VERPACKUNGSZWECKE

Die Erfindung bezieht sich auf einen Folienverbund, insbesondere für Verpackungszwecke, aus Aluminiumfolie oder Papier als Trägermaterial und mit einer als Haftvermittler dienenden Zwischenschicht aufkaschierten Polyesterfolie.

Folienverbunde dieser Art sind bekannt. Sie werden vor allem für die Verpackung von Lebensmitteln, beispielsweise in Form von Beuteln oder als gefaltete Verpackungen eingesetzt. Beim Aufkaschieren der Polyesterfolie wird als Zwischenschicht ein Haftvermittler auf wässriger beziehungsweise lösemittelhaltiger Basis eingesetzt. Beim Gebrauch solcher Folienverbunde wurden ihre verhältnismäßig großen Rückstellkräfte als nachteilig empfunden. Insbesondere für Verpakkungszwecke sind aber Folienverbunde wünschenswert, die sich leicht falten lassen und im gefalteten Zustand verbleiben, die sich aber auch leicht entfalten lassen und dann im entfalteten Zustand verbleiben, die also einen guten "dead-fold-Effekt" haben.

Ausgehend von diesen Erfahrungen aus der Praxis liegt der Erfindung die Aufgabe zugrunde, einen Folienverbund zu schaffen, die geringe Rückstellkräfte aufweist.

Diese Aufgabe wird bei einem Folienverbund der eingangs genannten Art dadurch geltist, daß die Zwischenschicht aus zwei in Coextrusionstechnik ausgebrachten Lagen von Polymeren mit verschiedenen Verbundhaftungseigenschaften besteht, von denen das mit der Trägerfolie verbundene Polymer eine ausgeprägt gute Verbundhaftung zur Trägerfolie und das mit der Polyesterfolie verbundene Polymer eine ausgeprägt gute Verbundhaftung zur Polyesterfolie hat.

Wegen der beiden in Coextrusionstechnik ausgebrachten Lagen von Copolymeren versteht es sich, daß die Polymere weitgehend übereinstimmende chemische und pysikalische Eigenschaften haben, insbesondere untereinander verträglich sind, nicht in der Grenzschicht delaminieren und im Bereich der Verarbeitungstemperatur praktisch gleiche Fließeigenschaften haben. Diese Forderungen in Verbindung mit den verschiedenen Verbundhaftungseigenschaften gegenüber der Trägerfolie und der Polyesterfolie lassen sich mit verschiedenen Copolymeren und Terpolymeren erzielen.

Nach einer ersten Ausgestaltung der Erfindung ist das mit der Trägerfolie verbundene Polymer ein Copolymer auf der Basis Ethylacrylsäureester, der vorzugsweise mit 5 - 15 % Acrylsäureester polymerisiert ist.

Nach einer weiteren Ausgestaltung der Erfindung ist das mit der Polyesterfolie verbundene Polymer ein Copolymer auf der Basis Ethylenvinylacetat, das vorzugsweise mit 8 - 28 %, insbesondere 10 - 28 % Vinylacetat copolymerisiert. Das mit der Polyesterfolie verbundene Polymer kann allerdings auch ein Terpolymer auf der Basis Ethylenvinylacetat sein, das vorzugsweise mit 8 - 28 %, insbesondere 10 - 28 % Vinylacetat und mit 2 - 5 % Maleinsäureanhydrid terpolymerisiert ist.

Der bevorzugte Anteil von Vinylacetat beträgt bei beiden Alternativen 18 - 28 %.

Als weitere Alternative kann das mit der Polyesterfolie verbundene Polymer ein Terpolymer auf der Basis Ethylacrylsäureester sein, der vorzugsweise mit 5 - 15 % insbesondere 10 - 15 % Acrylsäureester und mit 2 - 5 % Maleinsäureanhydrid terpolymerisiert ist.

Bevorzugte Stärken für beide Lagen zusammen sind 10 -40g/m$^2$ . Die Stärkeverteilung der beiden Lagen kann bis zu 50 : 50 % gewählt werden.

Sämtliche vorgenannten %-Angaben sind Vol.%.

Die besonderen mit der Erfindung erzielten Vorteile bestehen darin, daß der Folienverbund einen ausgezeichneten, sogenannten dead-fold-Effekt (praktisch keine Rückstellkräfte) aufweist. Der Folienverbund läßt sich mit hohen Produktionsgeschwindigkeiten bis zu 400 m/min. herstellen und unmittelbar weiterverarbeiten, weil keine Reaktionszeiten der Zwischenschicht oder Zeiten für die Verflüchtigung der Lösungsmittel abgewartet zu werden brauchen. Schließlich zeichnet sich der Folienverbund durch eine sehr gute Flachlage mit hoher Flexibilität aus.

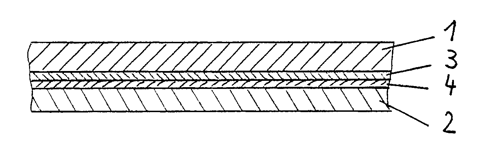

In der Zeichnung ist der Aufbau eines Folienverbundes dargestellt. Der Folienverbund besteht aus einem Träger, beispielsweise einer Aluminiumfolie 1, einer aufkaschierten Polyesterfolie 2 sowie einer zwischen der Aluminiumfolie 1 und der Polyesterfolie 2 befindlichen Zwischenschicht, die aus zwei Lagen 3,4 verschiedener Polymere besteht. Die Polyesterfolie 2 ist ist mit einer Coextrusionseinrichtung aufkaschiert, wobei die Lagenstärkeverteilung mittels eines AB-Adapters bis zu einem Verhältnis von 50 : 50 % möglich ist.

**Ansprüche**

1. Folienverbund, insbesondere für Verpackungszwecke, aus einer Aluminium- (1) oder Papierfolie als Träger und einer mit einer als Haftvermittler dienenden Zwischenschicht (3,4) aufkaschierten Polyesterfolie (2),
**dadurch gekennzeichnet,** daß die Zwischenschicht (3,4) aus zwei in Coextrusionstechnik aufgebrachten Lagen (3,4) von Polymeren mit verschiedenen Verbundeigenschaften besteht, von denen das mit dem Trägermaterial (1) verbundene Polymer eine ausgeprägt gute Verbundhaftung zum Trägermaterial (1) und das mit der Polyesterfolie (2) verbundene Polymer eine ausgeprägt gute Verbundhaftung zur Polyesterfolie (2) hat.

2. Folienverbund nach Anspruch 1,

**dadurch gekennzeichnet,** daß das mit dem Trägermaterial (1) verbundene Polymer ein Copolymer auf der Basis Ethylacrylsäureester ist.

3. Folienverbund nach Anspruch 2,

**dadurch gekennzeichnet,** daß der Ethylacrylsäureester mit 5 - 15 % Acrylsäureester copolymerisiert ist.

4. Folienverbund nach einem Ansprüche 1 bis 3,

**dadurch gekennzeichnet,** daß das mit der Polyesterfolie (2) verbundene Polymer ein Copolymer auf der Basis Ethylenvinylacetat ist.

5. Folienverbund nach Anspruch 4,

**dadurch gekennzeichnet,** daß das Ethylenvinylacetat mit 8 - 28 %, insbesondere 10 - 28 % Vinylacetat copolymerisiert ist.

6. Folienverbund nach einem der Ansprüche 1 bis 3,

**dadurch gekennzeichnet,** daß das mit der Polyesterfolie (2) verbundene Polymer ein Terpolymer auf der Basis Ethylenvinylacetat ist.

7. Folienverbund nach Anspruch 6,

**dadurch gekennzeichnet,** daß das Ethylenvinylacetat mit 8 - 28 %, insbesondere 10 - 28 % Vinylacetat und mit 2 - 5 % Maleinsäureanhydrid terpolymerisiert ist.

8. Folienverbund nach Anspruch 5 oder 6,

**dadurch gekennzeichnet,** daß der Vinylacetatanteil 8 - 28 % beträgt.

9. Folienverbund nach einem der Ansprüche 1 bis 3,

**dadurch gekennzeichnet,** daß das mit der Polyesterfolie (2) verbundene Polymer ein Terpolymer auf der Basis Ethylacrylsäureester ist.

10. Folienverbund nach Anspruch 9,

**dadurch gekennzeichnet,** daß der Ethlyacrylsäureester mit 5 - 15 %, insbesondere 10 - 15 % Acrylsäureester und mit 2 - 5 % Maleinsäureanhydrid terpolymerisiert ist.

11. Folienverbund nach einem der Ansprüche 1 bis 10,

**dadurch gekennzeichnet,** daß die Stärke der Lagen (3,4) insgesamt 10 - 40 g/m$^2$ beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | EP-A-0 215 480 (NIPPON PETROCHEMICALS CO.) <br> * Spalte 3, Zeile 55 - Spalte 4, Zeile 29 * * Spalte 10, Zeile 1 - Spalte 10, Zeile 47 @ Ansprüche 1-3, 5, 18, 19 * * Beispiel 1 * <br><br> - - - - - | 1,2,4,3, 5-11 | B 32 B 7/10 <br> B 32 B 27/28 <br> B 65 D 65/40 |

|  |
|---|
| **RECHERCHIERTE SACHGEBIETE (Int. Cl.5)** |
| B 32 B |

Der vorliegende Recherchenbericht wurde für alle Patentansprüche erstellt

| Recherchenort | Abschlußdatum der Recherche | Prüfer |
|---|---|---|
| Den Haag | 23 Januar 91 | DERZ T. |